# EUROPEAN PATENT APPLICATION

(11) **EP 2 730 329 A1**
(43) Date of publication of application: **14.05.2014**
(21) Application number: 12807052.1
(22) Date of filing: 03.07.2012
(51) Int. Cl.: B01D 53/62, B01D 53/72, B09B 3/00, C04B 7/60, C22B 7/02, F23G 5/00

(54) **VALUABLE SUBSTANCE RECOVERY DEVICE AND RECOVERY METHOD**

(30) Priority: 04.07.2011 JP 2011147845
(71) Applicant: Taiheiyo Cement Corporation, Tokyo 135-8578 (JP)
(72) Inventor: OKAMURA Souichirou, Tokyo 135-8578 (JP); HANADA Takashi, Tokyo 135-8578 (JP); SAKAMOTO Yoshiaki, Sakura-shi Chiba 285-8655 (JP)
(74) Representative: Isarpatent
(86) International application number: PCT/JP2012/066950
(87) International publication number: WO 2013/005734

(57) **Abstract**

[PROBLEM] To provide a valuable substance recovery device, etc. that can keep equipment costs and operation costs low and can reduce a burden of gas processing after secondary combustion.

[SOLUTION] A valuable substance recovery device 1 provided with a calcining furnace 11 that is attached to a cement firing device 2 and a return path 12 for returning an exhaust gas from the calcining furnace to the cement firing device. By effectively utilizing heat generated by the cement firing device in the calcining furnace for recovering valuable substances, equipment for supplying fuel for the calcining furnace becomes unnecessary and operation costs can be kept low. Acidic gases can be processed using a large amount of CaO present inside the cement firing device, making special processing device for processing the acidic gases unnecessary and making it possible to reduce equipment costs and operation costs significantly compared to the past. The calcining furnace is able to take in heat from a lower portion thereof and discharge the same from the return path, and can return the calcining furnace exhaust gas to an 800°C or higher temperature region of the cement firing device via the return path.

## Description

### TECHNICAL FIERD

The present invention relates to a device and a method for recovering valuable substances, and more particularly to a device and a method for recovering valuable substances such as rare metals and rare earths from wastes or the like.

### BACKGROUND ART

In the past, in order to recover valuable metals such as rare metals from wastes or the like, as a generally used method, firstly impurities such as organics are removed by calcining the wastes or the like, and ash obtained by the previous step is treated with chemicals to extract target valuable metals.

As a facility for calcining the wastes or the like is selected continuous type or batch type in accordance with property and size of the wastes or the like, and furnace type is also selected from various types including rotary type and stationary type. In case of recovering infinitesimal and expensive metals such as rare metals, batch type stationary furnaces are mainly used in consideration of recovery without ash dispersion.

Although calcining temperature varies also with the kind of target metals, the range of the temperature is from several hundreds to one thousand and several hundreds degree Celsius to remove organic components. A gas generated at the calcination contains a plenty of CO and hydrocarbon gases, so that not only exhaust gas processing is required but also it is necessary to pay attention to generation of dioxins (hereinafter referred to as "DXNs"). Therefore, the gas generated at the calcination is secondarily burned at 800°C or higher, and then an exhaust gas after the secondary combustion is released in the air via steps of cooling, acidic gas processing and dust collection.

### SUMMARY OF THE INVENTION

### PROBLEM TO BE SOLVED BY THE INVENTION

However, in the above conventional valuable substance recovery facility, etc., a large quantity of heat is consumed to calcine wastes or the like and to perform secondary combustion processing, which skyrockets operation cost, with small-scale batch type recovery devices and so on, it is difficult to realize recovery of valuable substances due to profitability.

In addition, when efficiently cooling a gas after secondary combustion, it is a method to add a heat recovery facility serving as a cooling facility also, but it is not feasible for small-scale batch type recovery devices and others in terms of operation and profitability. Further, in this case, there is a possibility of losing rapid cooling effect for suppressing resynthesis of DXNs, and it is difficult to realize in terms of profitability. As a result, from the gas after secondary combustion is hardly recovered heat, and the heat is wasted in the present situation.

Still further, the gas after secondary combustion contains acidic gases, especially chlorine and sulfur components derived from plastics should be processed by chemicals such as sodium hydroxide, which causes another problem of chemical processing cost as a heavy burden.

Then, the present invention has been made in consideration of the above problems in the conventional art, and the object thereof is to provide a valuable substance recovery device, etc. that can keep equipment costs and operation costs low and can reduce the burden of gas processing after secondary combustion.

### MEANS OF SOLVING THE PROBLEMS

To achieve the object, the present invention relates to a valuable substance recovery device, and the valuable substance recovery device is characterized by having: a calcining furnace attached to a cement firing device; and a return path for returning an exhaust gas from the calcining furnace to the cement firing device. Here, the valuable substance is defined as commercially valuable tangible objects including metals, rare metals, and rare earths.

Then, with the present invention, effectively utilizing heat generated by the cement firing device in the calcining furnace for recovering valuable substances unnecessitates equipment for supplying fuel for the calcining and can keep operation costs low. In addition, acidic gases can be processed using a large amount of CaO present in the cement firing device, which makes special processing device for processing the acidic gases unnecessary and makes it possible to reduce equipment costs and operation costs significantly compared to the past.

In the valuable substance recovery device, the calcining furnace can be one heating a waste or the like by utilizing heat generated in the cement firing device. Here, the waste or the like means that it includes, in addition to useless wastes that are discarded away, salable ones, and hereinafter the "waste or the like" will be used in the same meaning.

In the valuable substance recovery device, the calcining furnace may take in heat from a lower portion thereof and can discharge the same from the return path.

In the valuable substance recovery device, an exhaust gas from the calcining furnace can be returned to an 800°C or higher temperature region of the cement firing device via the return path. With this, DXNs can appropriately be processed; a burden of gas processing after secondary combustion can be lightened; and heat can be recovered from a generated organic gas.

In the valuable substance recovery device, the calcining furnace may be one heating the waste or the like on a heath with grates or/and holes, the drilled grates or/and holes can prevent a dust from accumulating on the heath, which prevents temperature increase of the waste or the like from being prevented by the accumulation of the dust, resulting in effective heating of the waste or the like.

Further, in the valuable substance recovery device, a bottom portion of the calcining furnace may be provided with an inclination for feeding or returning dust or a duct for gas spouting to prevent the dust from accumulating. With this, dust entering into the calcining furnace does not accumulate on the bottom portion below the heath, so that the dust can be returned to the cement kiln via the rising portion, which prevents temperature increase of the waste or the like from being prevented by the accumulation of the dust, resulting in effective heating of the waste or the like.

Still further, the valuable substance recovery device may further have temperature and oxygen gas concentration adjusting means for adjusting temperature and oxygen gas concentration in the calcining furnace by feeding one or more selected from air, oxygen gas, nitrogen gas, water and steam into the calcining furnace. With this, it becomes possible to maintain temperature and oxygen gas concentration in the calcining furnace to efficiently recover valuable substances from the waste or the like.

Further, the present invention relates to a valuable substance recovery method, and the method is characterized by having the steps of: recovering a valuable substance by calcining a waste and the like by using heat generated in a cement firing device; and returning a gas generated by the calcination to the cement firing device. With the present invention, in the same manner as the above inventions, when recovering a valuable substance from a waste or the like, equipment costs and operation costs can significantly be reduced compared to the past.

### EFFECTS OF THE INVENTION

As described above, with the present invention, it is possible to provide a valuable substance recovery device, etc. that can keep equipment costs and operation costs low and can reduce a burden of gas processing after secondary combustion.

### BRIEF DESCRIPTION OF THE DRAWINGS

FIG. 1 is an overall structure chart showing a cement burning device with a valuable substance recovery device according to the first embodiment of the present invention.
FIG. 2 is a schematic sectional view of a valuable substance recovery device according to the second embodiment of the present invention.
FIG. 3 is a schematic sectional view of a valuable substance recovery device according to the third embodiment of the present invention.
FIG. 4 is a schematic sectional view of a valuable substance recovery device according to the fourth embodiment of the present invention.
FIG. 5 is a schematic sectional view of a valuable substance recovery device according to the fifth embodiment of the present invention.
FIG. 6 is a schematic sectional view of a valuable substance recovery device according to the sixth embodiment of the present invention.
FIG. 7 is an overall structure chart showing a cement burning device with a valuable substance recovery device according to the seventh embodiment of the present invention.

### MODE FOR CARRYING OUT THE INVENTION

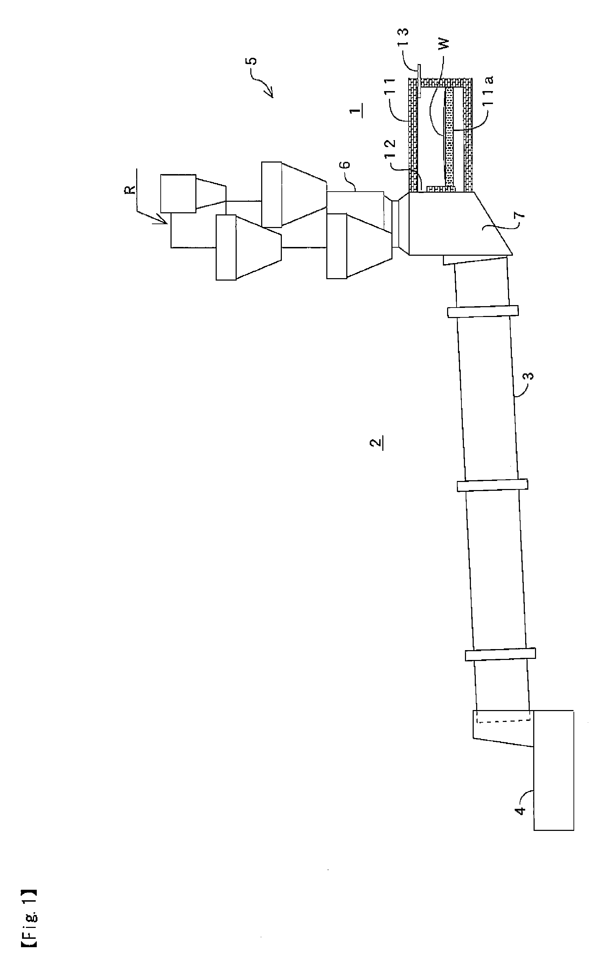

FIG. 1 shows the valuable substance recovery device according to the first embodiment of the present invention, and the valuable substance recovery device 1 is provided with a waste or the like calcining furnace (hereinafter abbreviated as "calcining furnace") 11 attached to a cement burning device 2, a return path 12 for returning an exhaust gas from the calcining furnace 11 to the cement burning device 2, and so on. A cement kiln 3, a clinker cooler 4, a preheater 5 and a calciner 6 composing the cement burning device 2 are generally used in a cement manufacturing device, so explanations thereof will be omitted.

The calcining furnace 11 is connected to a rising portion 7 situated between the cement kiln 3 and the calciner 6, and takes in heat generated in the cement burning device 2 to heat a waste or the like W. The calcining furnace 11 is provided with firebricks on inner walls thereof, and takes in heat from a lower portion thereof. The calcining furnace 11 is further provided with a heath 11a to which grates or/and holes are drilled to make wind and heat flow; a door (not shown) for feeding the waste or the like W on the heath 11a from outside of the calcining furnace 11 and for discharging it; and so on, and on the heath 11a is heated the waste or the like W.

The return path 12 is formed as a space that is constructed by removing a part of the firebricks at an upper portion of the calcining furnace 11 and is in communication with the rising portion 7. And, the valuable substance recovery device 1 returns the heat and the exhaust gas that are generated when the waste or the like W is heated in the calcining furnace 11 to the cement burning device 2.

A nozzle (temperature and oxygen gas adjusting means) 13 is mounted to feed the air or the like for adjusting temperature and oxygen gas concentration in the calcining furnace 11.

Next, the operation of the valuable substance recovery device 1 with the above-mentioned construction will be explained with reference to FIG. 1.

At the operation of the cement kiln 3, a cement raw material R fed to the preheater 5 is preheated in the preheater 5, calcined in the calciner 6, and then burned in the cement kiln 3 to be cement clinker. At the operation of the cement kiln 3, the inside of the rising portion 7 becomes approximately 900 °C to 1100°C, so that in the calcining furnace 11 facing this temperature region, by utilizing heat inside the rising portion 7, the waste or the like W that is fed from the door and is laid on the heath 11a is calcined at approximately 500 °C to 900°C. Constructing the inner wall of the calcining furnace 11 with firebricks allows combustion heat of the waste or the like W to be utilized, and the grates and holes drilled on the heath 11a prevents dust from accumulating on the heath 11a, which prevents disturbance of temperature increase due to dust accumulation, and heating the waste or the like W from below also allows efficient heating of the waste or the like W. In addition, connecting the calcining furnace 11 to a space in the rising portion 7 where dust quantity is low reduces dust quantity attached to surface of the waste or the like W.

The calcined waste or the like W is discharged from the door, and the dust attached to the surface of the waste or the like W is removed and ash of the waste or the like W is treated with chemicals to recover valuable substances.

The above waste or the like W is, for example, wastes including disused batteries such as a non-standard product of lithium-ion battery for automobiles and a spent dry cell for portable terminals, disused articles of substrates for portable terminals and personal computers, scraps including metals, disused articles of filters, IC chips, films and connecters attached to wire harnesses for automobiles as well as salable articles, and from these wastes can be recovered valuable substances such as lithium, cobalt, manganese and nickel. Articles that can be recovered are, in accordance with the treated waste or the like W, not only limited to the above waste or the like W, commercially valuable various tangible objects including other rare metals, metals other than rare metals and rare earths can be recovered also.

An exhaust gas, which is discharged from the cement kiln 3 and enters into the inside of the calcining furnace 11 through the rising portion 7 has a low oxygen gas concentration, so that it is possible to calcine the waste or the like W after increasing oxygen gas concentration in the calcining furnace 11 by feeding the air from the nozzle 13 as occasion demands. In addition, it is possible to feed various gases for the purpose of adjusting inner temperature of the calcining furnace 11 not only for adjusting the oxygen gas concentration, for instance, other than the air, oxygen gas, nitrogen gas, water, steam and others can be fed, one of them or more than one of them can be fed simultaneously.

A gas generated in the calcining furnace 11 by the calcination of the waste or the like W is returned to the rising portion 7 via the return path 12 as it is, and is processed downstream together with the exhaust gas of the cement kiln 3. Specifically, generated CO and hydrocarbon gases can be burned in the calciner 6; acidic gases generated from chlorine and sulfur components derived from the waste or the like W can be processed with a plenty of CaO contained in the cement raw material R; or DXNs can be decomposed at high temperatures, and then rapidly cooled to suppress resynthesis of DXNs.

In the above embodiment, although it is explained a case that the calcining furnace 11 is arranged at the rising portion 7 that is situated between the cement kiln 3 and the calciner 6, it is possible to arrange the calcining furnace 11 at the calciner 6, at the clinker cooler 4 or elsewhere other than the rising portion 7.

In addition, although the gas exhausted from the calcining furnace 11 is returned to the rising portion 7, other than the rising portion 7, the gas can be returned to a 800°C or higher temperature region of the preheater 5.

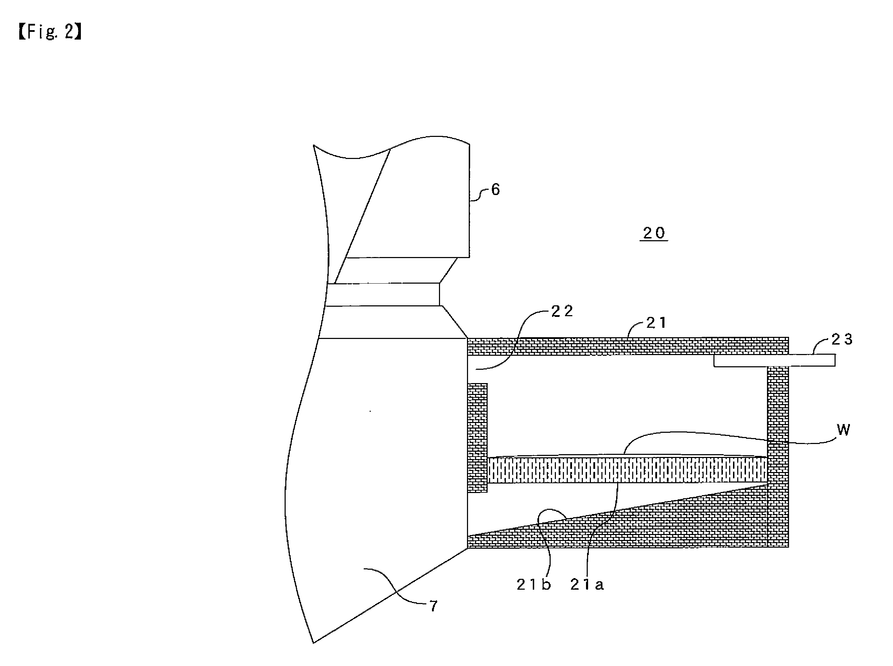

Next, the valuable substance recovery device according to the second embodiment of the present invention will be explained with reference to FIG. 2.

This valuable substance recovery device 20 is provided with: a calcining furnace 21 that is connected to the rising portion 7 situated between a cement kiln (not shown) and the calciner 6, in the same manner as the above calcining furnace 11, and has a heath 21a with the same construction as the heath 11a of the calcining furnace 11 and a door for feeding the waste or the like W on the heath 21a from outside of the calcining furnace 21 and for discharging it; a return path 22 and a nozzle 23 with the same constructions of the above return path 12 and the nozzle 13. In addition to those, the calcining furnace 21 is provided with an inclined face 21b on a bottom portion below the heath 21a to prevent a dust, which enters into the calcining furnace 21 from a cement burning device such as a cement kiln, from accumulating. With this construction, the dust entering into the calcining furnace 21 does not accumulate on the bottom portion below the heath 21a, so that the dust can be returned to the cement kiln via the rising portion 7, which prevents temperature increase of the waste or the like W from being prevented by the accumulation of the dust, resulting in effective heating of the waste or the like W. In addition, air nozzles and so on can be mounted to remove the dust on the inclined face 21b.

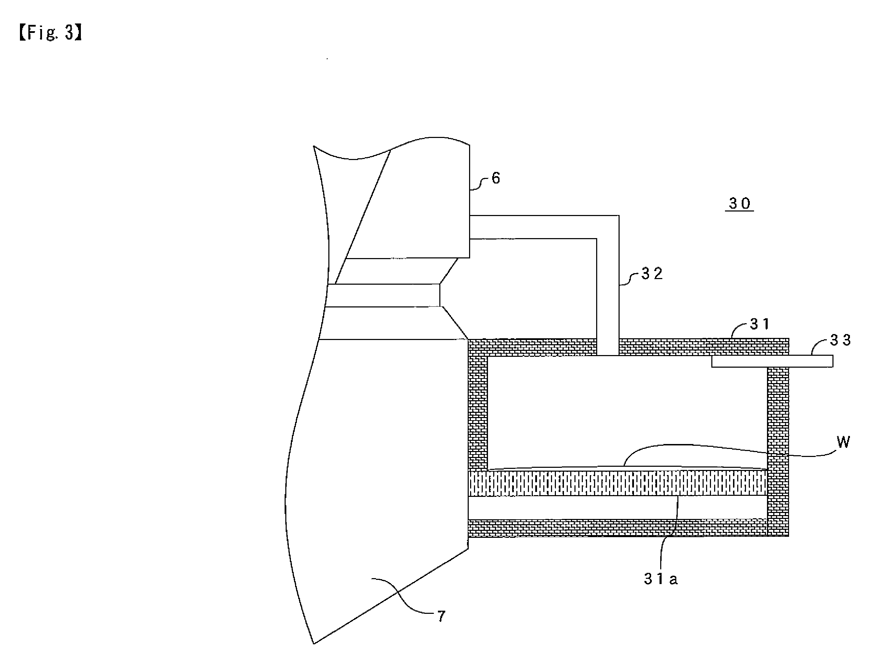

Next, the valuable substance recovery device according to the third embodiment of the present invention will be explained with reference to FIG. 3.

This valuable substance recovery device 30 is provided with: a calcining furnace 31 that is connected to the rising portion 7 situated between a cement kiln and the calciner 6, in the same manner as the above calcining furnace 11, and has a heath 31a with the same construction as the heath 11a of the calcining furnace 11 and a door for feeding the waste or the like W on the heath 31a from outside of the calcining furnace 31 and for discharging it; and a nozzle 33 with the same construction as the nozzle 13. In addition to those, in place of the return path 12, which is formed as a space that is constructed by removing a part of firebricks at the upper portion of the calcining furnace 11 and is in communication with the calciner 6, the valuable substance recovery device 30 is provided with a duct or a flue-like return path 32 that is in communication with the calciner 6 from a ceiling portion of the calcining furnace 31. The return path 32 makes it possible to introduce a gas generated by the calcination of the waste or the like W in the calcining furnace 31 into the calciner 6 as it is; burn CO and hydrocarbon gases, which are generated in the calcining furnace 31, in the calciner 6; and so on.

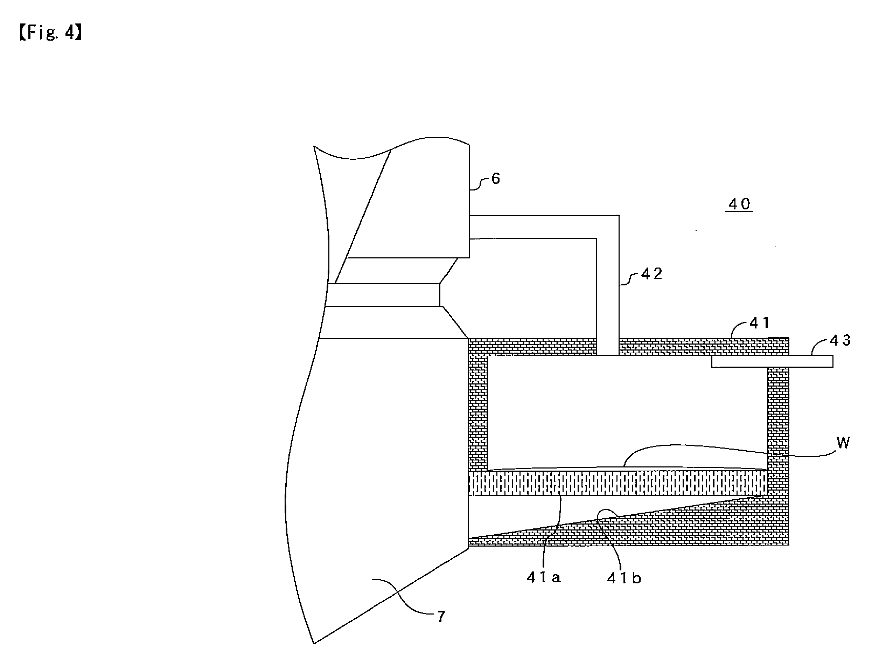

Next, the valuable substance recovery device according to the fourth embodiment of the present invention will be explained with reference to FIG. 4.

This valuable substance recovery device 40 is constructed by combining the construction of the valuable substance recovery device 20 shown in FIG. 2 and the construction of the valuable substance recovery device 30 shown in FIG. 3, and is provided with: a calcining furnace 41 having a heath 41a, a door for feeding the waste or the like W on the heath 41a from outside of the calcining furnace 41 and for discharging it, and an inclined face 41b; a return path 42; and a nozzle 43, and by the inclined face 41b, a dust entering into the inside of the calcining furnace 41 can be returned to a cement kiln via the rising portion 7, which allows the gas generated by the incineration of the waste or the like W in the calcining furnace 41 to the calciner 6 via the return path 42.

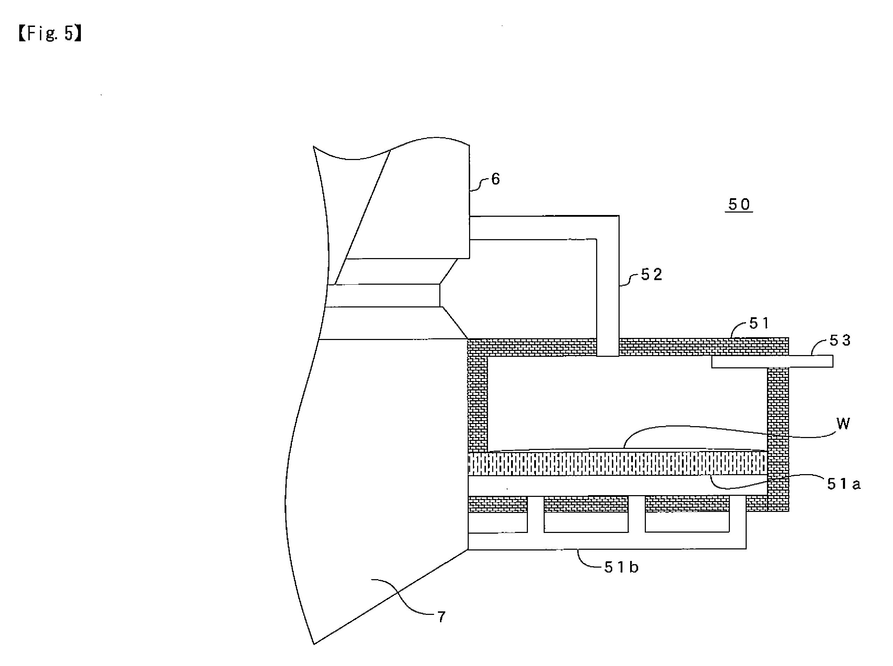

Next, the valuable substance recovery device according to the fifth embodiment of the present invention will be explained with reference to FIG. 5.

This valuable substance recovery device 50 is provided with: a calcining furnace 51 that is connected to the rising portion 7 situated between a cement kiln and the calciner 6, in the same manner as the above calcining furnace 31 shown in FIG. 3, and has a heath 51a with the same construction as the heath 31a of the calcining furnace 31 and a door for feeding the waste or the like W on the heath 51a from outside of the calcining furnace 51 and for discharging it; and a return path 52 and a nozzle 53 with the same constructions as the return path 32 and the nozzle 33. In addition to those, the valuable substance recovery device 50 is provided with a duct 51b for preventing accumulation of dust at a bottom portion of the calcining furnace 51, and blowing a hot gas from the rising portion 7 into the calcining furnace 51 through the duct 51b prevents the dust entering into the calcining furnace 51 from accumulating on a bottom thereof, which prevents temperature increase of the waste or the like W from being prevented by the accumulation of the dust, resulting in effective heating of the waste or the like W.

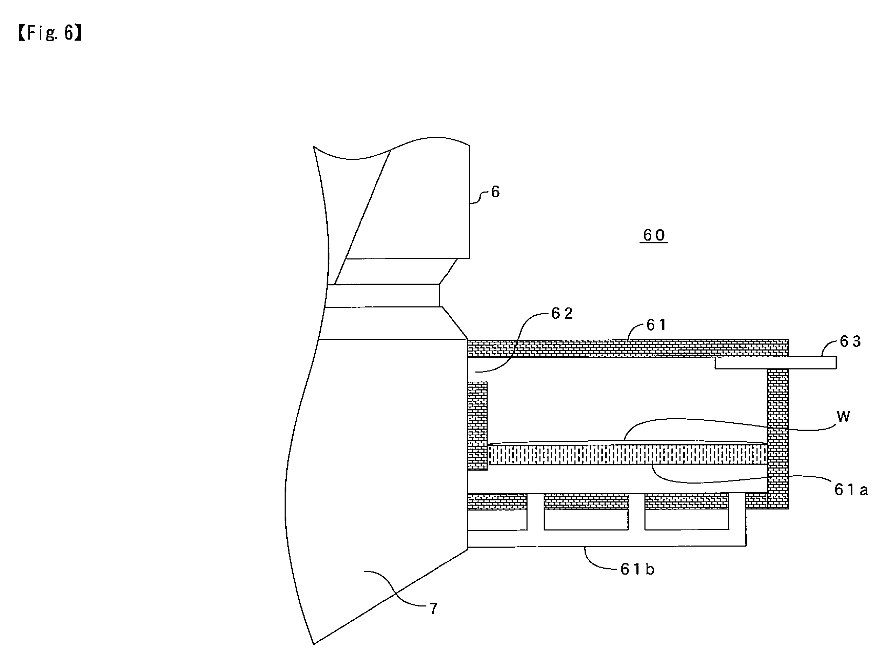

Next, the valuable substance recovery device according to the sixth embodiment of the present invention will be explained with reference to FIG. 6.

This valuable substance recovery device 60 is provided with: a calcining furnace 61 that is connected to the rising portion 7 situated between a cement kiln and the calciner 6, and has a heath 61a and a duct 61b with the same constructions as the heath 51a and the duct 51b of the calcining furnace 51 and a door for feeding the waste or the like W on the heath 61a from outside of the calcining furnace 61 and for discharging it; and a nozzle 63 with the same construction as the above nozzle 53. In place of the return path 52 that is in communication with the calciner 6 of the calcining furnace 51, the calcining furnace 61 is provided with a return path 62, which is formed as a space that is constructed by removing a part of firebricks at the upper portion of the calcining furnace 61 and is in communication with a cement firing device, and a gas generated by the calcination of the waste or the like W in the calcining furnace 61 is returned to the rising portion 7 via the return path 62 to process the gas downstream together with an exhaust gas of the cement kiln.

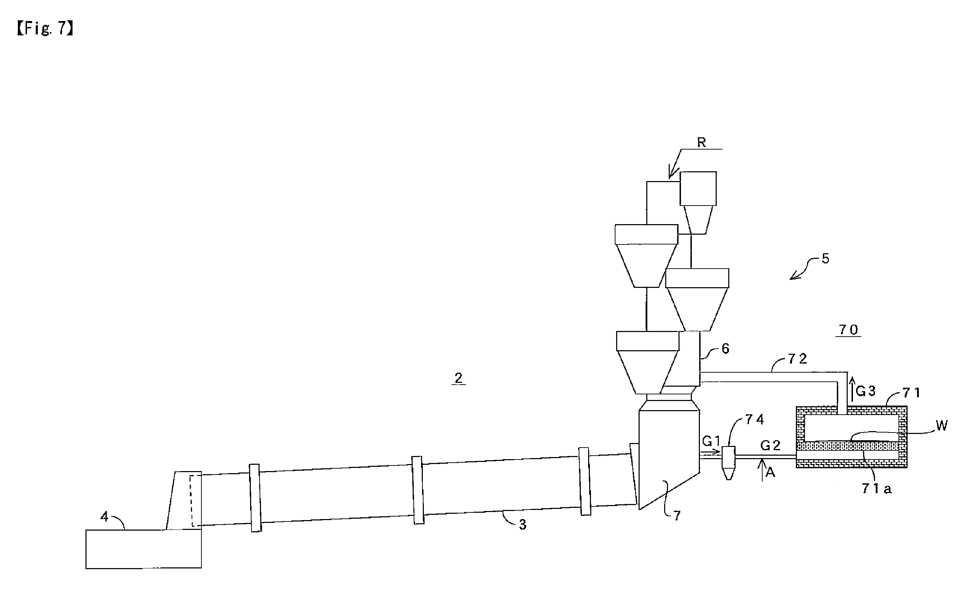

Next, the valuable substance recovery device according to the seventh embodiment of the present invention will be explained with reference to FIG. 7.

This valuable substance recovery device 70 is provided with: a dust collector 74 that is attached to the cement burning device 2 and performs dust collection from a combustion gas G1 partially extracted from the rising portion 7; a calcining furnace 71 for recovering valuable substances by directly heating the waste or the like W with a combustion gas G2 after the dust collection; a return path 72 for returning an exhaust gas G3 of the calcining furnace 71 to the calciner 6; temperature and oxygen gas concentration adjusting means (not shown) that supplies an adjustment gas A such as the air to the combustion gas G2 after the dust collection; and so on.

On inner walls of the calcining furnace 71 are disposed fire-resistance bricks, and the calcining furnace 71 takes in heat from a lower portion thereof. The calcining furnace 71 is provided with a heath 71a to which grates or/and holes are drilled to make wind and heat flow, and a door for feeding the waste or the like W on the heath 71a from outside of the calcining furnace 71 and for discharging it.

Next, the operation of the valuable substance recovery device 70 with the above construction will be explained with reference to FIG. 7.

As described above, at the operation of the cement kiln 3, the inside of the rising portion 7 becomes 900 °C to 1100 °C, after the dust contained in the combustion gas G1, which is partially extracted from a region with the above temperatures, is collected by the dust collector 74, the adjustment gas A is added to the combustion gas G2 to adjust the inside of the calcining furnace 71 between 500 °C to 900 °C, which directly heats the waste or the like W placed on the heath 71a of the calcining furnace 71. Since the dust is recovered by the dust collector 74, a small quantity of dust enters into the calcining furnace 71, so that quantity of dust adhered to the surface of calcined waste or the like W can be kept small. In addition, partially extracting the combustion gas G1 from a space of the rising portion 7 of small dust content allows quantity of dust adhered to the surface of the waste or the like W to be small also.

The calcined waste or the like W is discharged from a door; the dust attached to the surface of the waste or the like W is removed; and an ash of the waste or the like W is processed with chemicals and so on to recover valuable substances.

The waste or the like W and valuable substances that can be recovered are the same as the above embodiments. And, an exhaust gas G1 of the cement kiln 3 is low in oxygen concentration, so that the air is supplied as the adjustment gas A as occasion demands and various adjustment gases A such as oxygen gas, nitrogen gas, water and steam are supplied in order to adjust inner temperature of the calcining furnace 71 in the same manner as the above embodiments.

The exhaust gas G3 generated by the calcination of the waste or the like W in the calcining furnace 71 is returned to the calciner 6 via the return path 72 and is processed downstream together with the exhaust gas of the cement kiln 3. Specific processing method is also the same as the above embodiments.

In this connection, although from the rising portion 7 situated between the cement kiln 3 and the calciner 6 is partially extracted the combustion gas G1 in the seventh embodiment, if 500°C to 1200°C combustion gas can partially be extracted, it is possible to partially extract a gas from other portions of the cement burning device 2, for example a cooler exhaust gas can partially be extracted.

In addition, although the exhaust gas G3 discharged from the calcining furnace 71 is returned to the calciner 6, besides the rising portion 7, it is possible to return to other areas of the preheater 5 whose temperature is 800°C or more.

### EXPLANATION OF REFERENCE NUMBERS

1 valuable substance recovery device
2 cement burning device
3 cement kiln
4 clinker cooler
5 preheater
6 calciner
7 rising portion
11 calcining furnace
11a heath
12 return path
13 nozzle
20 valuable substance recovery device
21 calcining furnace
21a heath
21b inclined face
22 return path
23 nozzle
30 valuable substance recovery device
31 calcining furnace
31a heath
32 return path
33 nozzle
40 valuable substance recovery device
41 calcining furnace
41a heath
41b inclined face
42 return path
43 nozzle
50 valuable substance recovery device
51 calcining furnace
51a heath
51b duct
52 return path
53 nozzle
60 valuable substance recovery device
61 calcining furnace
61a heath
61b duct
62 return path
63 nozzle
70 valuable substance recovery device
71 calcining furnace
71a heath
72 return path
74 dust collector

## Claims

1. A valuable substance recovery device comprising:
a calcining furnace attached to a cement firing device; and
a return path for returning an exhaust gas from the calcining furnace to the cement firing device.

2. The valuable substance recovery device as claimed in claim 1, wherein said calcining furnace is one heating a waste or the like by utilizing heat generated in the cement firing device.

3. The valuable substance recovery device as claimed in claim 1 or 2, wherein said calcining furnace takes in heat from a lower portion thereof and discharges the same from the return path.

4. The valuable substance recovery device as claimed in claim 1, 2 or 3, wherein an exhaust gas from the calcining furnace is returned to an 800°C or higher temperature region of the cement firing device via the return path.

5. The valuable substance recovery device as claimed in claim 2, 3 or 4, wherein said calcining furnace is one heating the waste or the like on a heath with grates or/and holes.

6. The valuable substance recovery device as claimed in one of claims 1 to 5, wherein a bottom portion of said calcining furnace is provided with an inclination for feeding or returning dust or a duct for gas spouting to prevent the dust from accumulating.

7. The valuable substance recovery device as claimed in one of claims 1 to 6 further comprising temperature and oxygen gas concentration adjusting means for adjusting temperature and oxygen gas concentration in said calcining furnace by feeding one or more selected from an atmosphere, oxygen gas, nitrogen gas, water and steam into the calcining furnace.

8. A valuable substance recovery method comprising the steps of:
recovering a valuable substance by calcining a waste or the like by using heat generated in a cement firing device; and
returning a gas generated by the calcination to the cement firing device.
